# EUROPEAN PATENT SPECIFICATION

(11) **EP 1 553 014 B1**
(45) Date of publication and mention of the grant of the patent: **17.05.2006**
(21) Application number: 05008260.1
(22) Date of filing: 14.02.2001
(51) Int. Cl.: B62K 19/46, B62J 35/00, B62K 11/04

(54) **Article accomodation box of scooter-type vehicle**
Gepäckbehälter für rollerartiges Fahrzeug
Boîte de bagage pour véhicule du type scooter

(30) Priority: 16.02.2000 JP 2000038753
(43) Date of publication of application: 13.07.2005
(62) Divisional of application: 01103482.4
(73) Proprietor: SUZUKI KABUSHIKI KAISHA, Hamamatsu-Shi, Shizuoka-Ken (JP)
(72) Inventor: Yamauchi, Kosaku, Hamana-Gun Shizuoka-Ken (JP)
(74) Representative: Klunker . Schmitt-Nilson . Hirsch

(56) References cited:
- EP-A- 0 323 908
- EP-A- 0 911 253
- EP-A- 0 952 076
- US-A- 5 433 286
- PATENT ABSTRACTS OF JAPAN vol. 1999, no. 10, 31 August 1999 (1999-08-31) & JP 11 129969 A (YAMAHA MOTOR CO LTD), 18 May 1999 (1999-05-18)
- PATENT ABSTRACTS OF JAPAN vol. 014, no. 285 (M-0987), 20 June 1990 (1990-06-20) & JP 02 088376 A (HONDA MOTOR CO LTD), 28 March 1990 (1990-03-28)

## Description

### BACKGROUND OF THE INVENTION

The present invention relates to a scooter-type vehicle particularly provided with an improved structure of an article accommodation box.

A scooter type vehicle such as motorcycle (two-wheeled motorcycle) generally has an article accommodation box or chamber for accommodating an article such as helmet or the like, and the accommodation box is arranged below a rider's seat. Further, in a large-size scooter type vehicle, the article accommodation box has a large inner volume so that two helmets can be accommodated therein Document EP0323908 discloses a scooter type vehicle according to the preamble of claim 1.

Since most of such scooter type vehicles is provided with a swing type engine unit integrally formed with a power transmission unit swingably mounted to a rear portion of a vehicle body, the article accommodation box is arranged in a central portion of the vehicle body (for example, as disclosed in Japanese Utility Model Laid-open Publication Nos. SHO 63-170391, SHO 63-184190 and HEI 1-73092 and Japanese Patent Laid-open Publication No. HEI 2-88376).

However, it has been difficult to apply the conventional swing type engine unit to the large-size scooter type vehicle. That is, as the engine unit becomes long in accordance with an increase of the engine size, the total length of the vehicle also becomes long, and a center of gravity of the vehicle moves to a rear portion. Thus, a load carried by a front wheel is reduced, and it makes difficult to adjust an alignment of the vehicle.

In order to obviate such defects mentioned above, in recent years, there has been proposed a structure in which an entire engine unit is arranged to a front portion of the vehicle body by fixing the engine of the engine unit to the vehicle body side and, on the other hand, a power transmission unit is separated from the engine unit and swingably mounted to the vehicle body (for example, as disclosed in Japanese Patent Laid-open Publication No. HEI 11-129969).

The arrangement of the entire engine unit to the front side portion of the vehicle body allows the front wheel and the rear wheel to carry substantially equal loads to each other, and a weight below the spring of the rear wheel can be reduced. Accordingly, the adjusting alignment of the vehicle can be improved. However, in such arrangement, the engine is arranged near the central portion of the vehicle body, it is difficult to secure an inner volume of the article accommodation box in which two helmets, particularly, of two full-faced helmets, are accommodated.

It may be possible to adopt a structure in which two helmets are accommodated in parallel in the width direction of the vehicle body without extending the longitudinal length of the vehicle body. However, in such structure, the width of the vehicle body is widened, which may reduce a running performance of the vehicle and also reduce a mileage.

### SUMMARY OF THE INVENTION

An object of the present invention is to substantially eliminate defects or undesirable matters encountered in the prior art mentioned above and to provide an article accommodation box of a scooter type vehicle such as motorcycle having an improved structure which can accommodate two full-faced helmets in a longitudinal direction of a vehicle body without increasing a size thereof.

This and other objects can be achieved according to the present invention by providing an article accommodation box of a scooter type vehicle in which a seat member is arranged above a rear wheel so as to extend in a longitudinal direction along an advancing direction of the vehicle, the seat member includes a driver's seat section and a pillion section divided along the longitudinal direction of the vehicle body, the pillion section having a seat surface higher in level than that of the rider's seat section, and an article accommodation box is disposed below the seat member, the accommodation box being characterized in that the article accommodation box is disposed substantially directly above the rear wheel and below the pillion section and has an inner volume sufficient to accommodate two helmets in a manner aligning with each other along the longitudinal direction of the vehicle body.

The article accommodation box has a bottom surface having a tapered shape slanting towards longitudinal forward and rearward direction ( 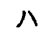 -like shape) in a side view so as to accommodate two helmets with head side top portions thereof being directed upward.

The article accommodation box has such an inner shape that two helmets are accommodated with both the front side portions thereof being directed in the same longitudinal direction of the vehicle body.

The seat member includes a backrest for holding a waist portion of a rider formed between the rider's seat section and the pillion section and a head top portion of the front side helmet is positioned near the waist holding backrest and a head top portion of the rear side helmet is positioned near a rear end portion of the pillion section.

The fuel tank is arranged below the rider's seat section.

The scooter type vehicle is a two-wheeled motorcycle.

According to the structure of the present invention, since the article accommodation box or chamber capable of receiving two helmets in series in the - longitudinal direction of the vehicle body is provided substantially directly below the pillion section and above the rear wheel, it is possible to make low the height of the seat surface of the rider's seat and it is hence possible to accommodate two full-faced helmets in the longitudinal direction of the vehicle body without increasing the size thereof.

Furthermore, since the bottom floor surface of the accommodation box is formed so as to provide the longitudinally tapered shape in a side view so as to accommodate two helmets so that the head top portions thereof are directed upward, the article accommodation box can be made-compact.

Still furthermore, in the arrangement that both the front portions of two helmets are directed to the same direction along the longitudinal direction of the vehicle body, it is possible to make smart the shape of the vehicle body in the plan view.

Further, since the fuel tank is arranged in the lower portion of the rider's seat section, the carrying loads of the front wheel and the rear wheel are less changed and the traveling stability can be improved.

Still furthermore, a motorcycle having such structures as those mentioned above will achieve an improved performance.

The nature and further characteristic features of the present invention will be made more clear from the following descriptions made with reference to the accompanying drawings.

### BRIEF DESCRIPTION OF THE DRAWINGS

In the accompanying drawings:
Fig. 1 is a left side elevational view showing a a scooter type vehicle to which a first embodiment of an article accommodation box of the present invention is applicable;
Fig. 2 is a left side elevational view showing an interior structure of the scooter type vehicle shown in Fig. 1; and
Fig. 3 is a left side elevational view showing an interior structure of the scooter type vehicle according to a second embodiment of the present invention.

### DESCRIPTION OF THE PREFERRED EMBODIMENTS

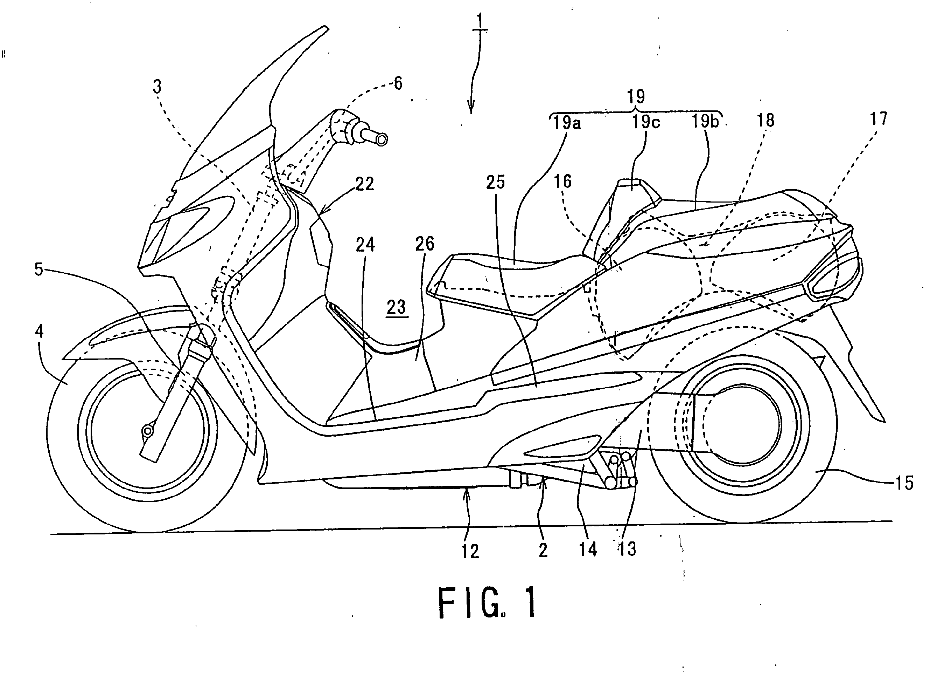

A preferred embodiment of the present invention will be described hereunder with reference to the accompanying drawings of Figs. 1 to 3, in which same reference numerals are added to the same or corresponding members or portions of a scooter type vehicle

Referring to Figs. 1, 2 and 3, a scooter type vehicle 1 such as two-wheeled motorcycle is equipped with a vehicle body frame 2 and a head pipe 3 provided to a front end side of the vehicle body frame 2. A front fork 5 rotatably supporting a front wheel 4 is connected to the head pipe 3 and a handle bar 6 is also connected to the head pipe 3 to thereby rotatably steer the front wheel 14 to right and left directions.

Left and right pairs of upper and lower downtubes 7b and 7a extend from a rear portion of the head pipe 3 towards an obliquely rearward lower portion (only the left side pair of downtubes 7a and 7b are shown in figures). The lower downtube 7a extending from the rear lower portion of the head pipe 3 extends once substantially vertically downward, and then, is bent in a substantially horizontal direction so as to extend towards a rear portion, and a rear end portion thereof extends towards an obliquely upper portion of the vehicle body.

The vehicle body frame 2 includes a pair of right and left center frames 8 extending towards an obliquely rearward upper portion from an approximately middle portion of the vertical portion of the lower downtube 7a (only the left side center frame 8 is shown in figures) and also includes a pair of sub-frames 9 extending towards a rear end portion of the lower downtube 7a from the rear end portions of the center frames 8 (only the left side sub-frame 9 is shown in figures). The downtube 7a and the sub-frame 9 are connected through a pivot 10.

The vehicle body frame 2 further includes a pair of right and left seat frames 11 extending towards an oblique rearward upper portion from the rear upper portion of the sub-frame 9.

On the other hand, the upper downtube 7b extends downward from the rear upper portion of the head pipe 3 substantially in parallel to the lower downtube 7a and is connected to a portion near a front end of the center frame 8.

An engine unit 12 is mounted in a space surrounded by the lower downtube 7a, the center frame 8 and the sub-frame 9 of the vehicle body frame 2. Further, a transmission unit 13 as a power transmission device is arranged in a rear portion of the engine unit 12, and the transmission unit 13 has a front portion which is swingably mounted to the pivot 10.

The transmission unit 13 also serves as a swing arm and is flexibly supported to be swingable to the vehicle body frame 2 through a shock absorber 14. Further, a rear wheel 15 as a drive wheel is held to a rear end of the transmission unit 13.

An article accommodation box (chamber) 18 as an article container for accommodating full-faced helmets 16 and 17 (hereinlater, which may simply refer to as helmets), articles, tools or the like is arranged substantially above the rear wheel 15. Further, a rider's seat 19 for a rider is disposed above the article accommodation box 18, and this seat 19 also serves as a lid thereof, which is freely opened and closed.

The rider's seat 19 is separated into two parts in the longitudinal direction, i.e. a driver's seat 19a on which a driver sits and a pillion 19b on which a pillion passenger sits. The article accommodation box 18 is arranged directly below the pillion 19b. Further, a waist holding backrest 19c for holding a waist portion of the driver is formed between the rider's seat 19a and the pillion 19b so as to protrude upward so that a seat surface of the pillion 19b is made higher than that of the rider's seat 19a.

Further, the article accommodation box (chamber) 18 is also divided into longitudinal two sections of a front box (section) 18a and a rear box (section) 18b so that two helmets 16 and 17 can be received in series in a longitudinal direction of the vehicle body. A floor surface of the front box 18a is formed downward towards a front direction of the vehicle body and a floor surface of the rear box 18b is formed downward towards a rear direction so that the bottom floor surface of the accommodation box 18 is formed entirely in a tapered shape ( 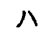 -shape) in a side view.

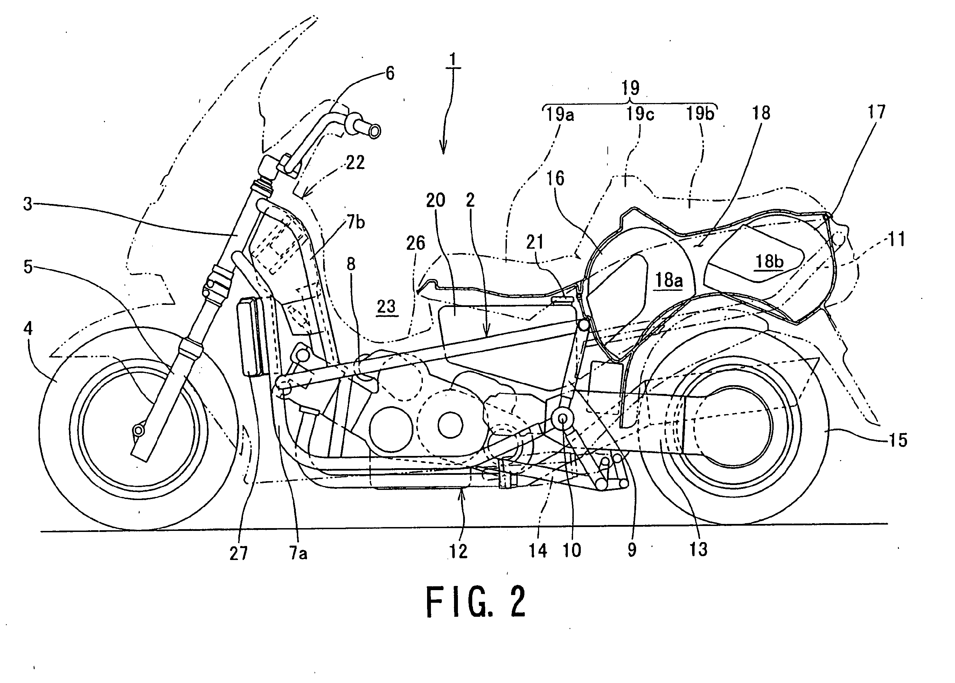

In the arrangement of this embodiment of the present invention, two helmets 16 and 17 are arranged in a state that head top portions thereof are directed upward and front portions thereof are directed forward in an advancing (longitudinal) direction of the vehicle. In such arrangement, the head top portion of the front helmet 16 is positioned near the waist holding backrest 19c for the driver and the head top portion of the rear helmet 17 is positioned near the rear end portion of the pillion 19b as shown in Fig. 2.

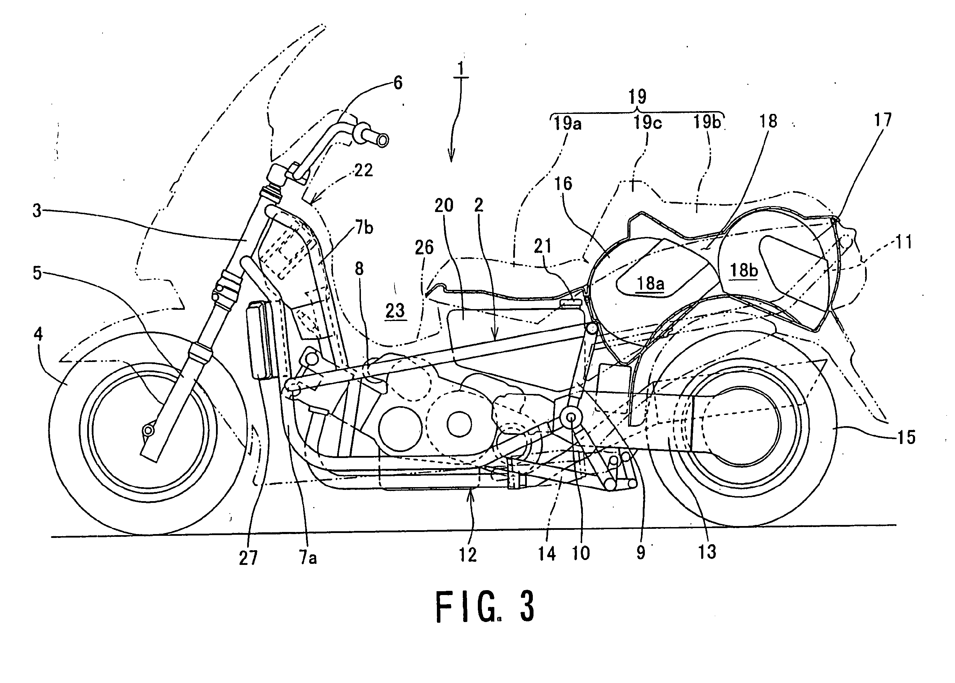

On the other hand, in a second embodiment of the present invention, two helmets 16 and 17 are arranged in a state that the head top portions thereof are directed upward and both the front portions thereof are directed backward in the advancing direction of the vehicle as shown in Fig. 3.

Further, a fuel tank 20 is arranged in a space directly below the rider's seat 19a, and an oil supply port 21 formed to the fuel tank 20 is positioned just before the front box 18a of the article accommodation box 18.

The vehicle body frame 2 is covered around itself by a vehicle body cover 22, for example, formed of synthetic resin as a molded product.

The vehicle body frame 2 and the vehicle body cover 22 are largely bent downward in substantially a U-shape, at a portion between the head pipe 3 and the rider's seat 19a, so as to form a foot passing space 23 extending in a width direction of the vehicle body, and a low footrest floor 24 for the rider having right and left bottom portions, on which the rider puts his (her) foot, is formed. Further, a footrest floor 25 for the pillion passenger is also formed at the rear side portions of the right and left bottom portions of the footrest floor 24.

Furthermore, a tunnel-shaped portion for the engine is formed to the central portion of the footrest floor 24 as an engine tunnel 26 so as to longitudinally extend and protrude upward.

In the embodiment mentioned above, the engine unit 12 mounted on the scooter type vehicle 1 such as two-wheeled motorcycle includes a water-cooled engine and has a structure that a radiator 27 for cooling the cooled-water engine is arranged in the vehicle body cover 22 between the front wheel 4 and the engine unit 12.

Hereunder, the embodiments having structures mentioned above will operate in the following manners.

According to the structure of the present invention, the seat portion 19 is divided in the longitudinal direction of the vehicle body into two sections, i.e. the rider's seat 19a and the pillion 19b having the seat surface higher than that of the rider's seat 19a. The article accommodation box 18 is arranged substantially directly below the pillion's seat 19b and above the rear wheel 15. Accordingly, the two helmets 16 and 17 can be stored in the accommodation box 18 (18a, 18b) along the longitudinal direction of the vehicle body, so that the operation of the vehicle and a foot stepping characteristic can be improved.

Furthermore, since the fuel tank 20 can be arranged below the rider's seat 19a and, hence, the fuel increases or decreases in the fuel tank 20 at the portion near the center of gravity of the vehicle body. Therefore, the loads to be carried by the front wheel 4 and the rear wheel 15 are less changed and the adjusting alignment can be hence improved.

Further, according to the present invention, the width of the vehicle body in the width direction, in particular, the width below the seat portion 19 can be reduced by arranging two helmets 16 and 17 in the longitudinal direction in the accommodation box 18. Therefore, the reduction of the width can decrease the projected area and the mileage of the vehicle.

Furthermore, it is also possible to reduce the longitudinal length of the article accommodation box 18 by forming the bottom floor surface thereof so as to provide a longitudinally tapered shape ( 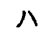 -shape) in a side view to thereby accommodate two helmets 16 and 17 in a state that the head top portions thereof are directed upward. Moreover, it is not necessary to expand the width of the article accommodation box 18.

Furthermore, since article accommodation box 18 has a shape in which two helmets are arranged so as to both direct forward or rearward in the longitudinal direction of the vehicle body, the shape of the accommodation box and, hence, the vehicle body can be made smart in a plan view.

Still furthermore, the head top portion of the front side helmet 16 is positioned near the waist holding backrest 19c for the driver and the head top portion of the rear side helmet 17 is positioned near the rear end portion of the pillion 19b. According to such arrangement, the seating surface of the pillion 19b can be made lower and the seat stroke for the seating portion can be sufficiently ensured.

It is to be noted that the present invention is not limited to the described embodiments and many other changes and modifications may be made without departing from the scopes of the appended claims.

## Claims

1. A scooter-type vehicle in which a seat member (19) is disposed above a rear wheel (15) and including a driver's seat section (19a) and a pillion section (19b), which is divided along the longitudinal direction of the motorcycle body, the pillion section having a seat surface higher in level than that of the driver's seat section, an engine unit is mounted to a vehicle body frame, and a power transmission unit is arranged to a rear side of the engine unit to be swingable about a pivot portion, **characterized in that** an article accommodation box (18) is disposed substantially directly above the rear wheel, behind the driver's seat section (19a) and below the pillion section so that the article accommodation box has a bottom surface having a tapered shape slantin towards the longitudinal forward-and-downward direction in a side view so as to be suitable for accommodating two helmets (16, 17) with head side top portions thereof being directed upward over the driver's seat section.

2. The scooter type vehicle according to claim 1, wherein the vehicle body frame includes a pair of right and left seat frames (11) extending rearward obliquely upward from the front side portion of the article accommodation box so as to locate the article accommodation box between the right and left seat frames.

## Patentansprüche

1. Ein rollerartiges Fahrzeug, in dem ein Sitzelement (19) über einem Hinterrad (15) angeordnet ist, welches einen Fahrersitzabschnitt (19a) und einen Soziusabschnitt (19b) umfasst, die entlang der Längsrichtung des Motorradkörpers getrennt sind, wobei der Soziusabschnitt ein höheres Sitzflächenniveau besitzt als der Fahrersitzabschnitt, wobei eine Motoreinheit an einen Fahrzeugkörperrahmen montiert ist, und wobei eine Kraftübertragungseinheit an einer hinteren Seite der Motoreinheit angeordnet ist, um um einen Drehabschnitt schwenkbar zu sein, **dadurch gekennzeichnet, dass** ein Unterbringungsbehälter (18) für Gegenstände im Wesentlichen direkt über dem Hinterrad, hinter dem Fahrersitzabschnitt (19a) und unter dem Soziusabschnitt angeordnet ist, so dass der Unterbringungsbehälter für Gegenstände eine Bodenfläche mit einer kegelartigen Form besitzt, die sich in einer Seitenansicht in Richtung der nach vorne und unten gerichteten Längsrichtung neigt, um zum Unterbringen von zwei Helmen (16, 17) geeignet zu sein, deren obere Kopfseitenbereiche über den Fahrersitzabschnitt nach oben gerichtet sind.

2. Das rollerartige Fahrzeug nach Anspruch 1, wobei der Fahrzeugkörperrahmen ein Paar rechter und linker Sitzrahmen (11) umfasst, welche sich von dem vorderen Seitenbereich des Unterbringungsbehälters für Gegenstände nach hinten schräg nach oben erstrecken, um den Unterbringungsbehälter für Gegenstände zwischen den rechten und linken Sitzrahmen anzuordnen.

## Revendications

1. Un véhicule de type scooter, dans lequel un organe formant selle (19) est disposé au-dessus d'une roue arrière (15) et comprend une section de selle de conducteur (19a) et une section de passager (19b), divisé dans la direction longitudinale du corps de motocycle, la section de passager ayant une surface de selle de niveau supérieur à celle de la section de selle de conducteur, une unité à moteur thermique est montée sur un châssis de corps de véhicule, et une unité de transmission de puissance est agencée sur un côté arrière de l'unité de moteur thermique pour pouvoir pivoter autour d'une partie formant pivot, **caractérisé en ce qu'**une boîte de logement d'articles (18) est disposée pratiquement directement au-dessus de la roue arrière, derrière la section de selle de conducteur (19a) et au-dessous de la section de passager, de manière que la boîte de logement d'article ait une surface inférieure à forme effilée, allant en s'inclinant en direction de l'avant et du bas, longitudinalement en observant en vue de côté, de manière à convenir pour loger deux casques (16, 17), les parties supérieures pour la tête de ceux-ci étant orientées vers le haut, au-dessus de la section de selle de conducteur.

2. Le véhicule de type scooter selon la revendication 1, dans lequel le châssis de corps de véhicule comprend une paire de châssis de selle droit et gauche (11) s'étendant vers l'arrière, obliquement vers le haut depuis la partie de côté avant de la boîte de logement d'articles, de manière à verrouiller la boîte de logement d'articles entre les châssis de selle droit et gauche.
